# EUROPEAN PATENT SPECIFICATION

(11) **EP 3 970 342 B1**
(45) Date of publication and mention of the grant of the patent: **19.02.2025**
(21) Application number: 19727753.6
(22) Date of filing: 17.05.2019
(51) Int. Cl.: H04L 41/5051, H04L 67/60, H04W 4/00, H04L 41/50, H04W 36/00, H04W 4/70, H04W 48/00

(54) **NETWORK NODE AND METHOD PERFORMED THEREIN FOR HANDLING COMMUNICATION IN A WIRELESS COMMUNICATION NETWORK**
FUNKNETZWERKNOTEN UND DARIN DURCHGEFÜHRTES VERFAHREN ZUR HANDHABUNG VON KOMMUNIKATION IN EINEM DRAHTLOSKOMMUNIKATIONSNETZWERK
NOEUD DE RÉSEAU ET PROCÉDÉ MIS EN OEUVRE DANS CELUI-CI POUR GÉRER UNE COMMUNICATION DANS UN RÉSEAU DE COMMUNICATION SANS FIL

(43) Date of publication of application: 23.03.2022
(73) Proprietor: Telefonaktiebolaget LM Ericsson (publ), 164 83 Stockholm (SE)
(72) Inventor: SKUBIC, Björn, 191 48 Sollentuna (SE); CAI, Xuejun, 187 53 Täby (SE)
(74) Representative: Ericsson
(86) International application number: PCT/SE2019/050452
(87) International publication number: WO 2020/236043

(56) References cited:
- WO-A1-2014/139553
- WO-A1-2014/139553
- WO-A1-2017/100640
- WO-A1-2017/100640
- WO-A1-2019/035406
- WO-A1-2019/035406
- US-A1- 2018 192 390
- US-A1- 2018 192 390
- US-A1- 2018 270 778
- US-A1- 2018 270 778
- US-A1- 2018 317 157
- US-A1- 2018 317 157

## Description

### TECHNICAL FIELD

Embodiments herein relate to a network node and method performed therein regarding wireless communication. In particular, embodiments herein relate to handling communication such as providing application or services in a wireless communication network.

### BACKGROUND

In a typical wireless communication network, user equipments (UE), also known as wireless communication devices, mobile stations, stations (STA) and/or wireless devices, may communicate via a Radio Access Network (RAN) to one or more core networks (CN). The RAN covers a geographical area which is divided into service areas, also known as cells, with each cell being served by a radio network node e.g., a Wi-Fi access point or a radio base station (RBS), which in some networks may also be called, for example, a NodeB, an eNodeB or a gNodeB. The cell is a geographical area where radio coverage is provided by the radio network node. The radio network node operates on radio frequencies to communicate over an air interface with the wireless devices within range of the radio network node. The radio network node communicates over a downlink (DL) to the wireless device and the wireless device communicates over an uplink (UL) to the radio network node.

A Universal Mobile Telecommunications network (UMTS) is a third generation (3G) telecommunications network, which evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

Specifications for the Evolved Packet System (EPS), also called a Fourth Generation (4G) network, have been completed within the Third Generation Partnership Project (3GPP) and this work continues in the coming 3GPP releases, for example to specify a Fifth Generation (5G) network. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network.

With the emerging 5G technologies such as New Radio (NR), the use of very many transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

End-user services may be provided in a cloud manner through distributed applications that are hosted in a distributed cloud. The distribution can be exploited for different purposes. It may be exploited for providing improved service quality by allowing each user to be served from a nearby location in order to minimize the effects of network latency and congestion. It may be exploited for providing increased service resilience in case of failures in the cloud infrastructure or communication network.

An edge cloud here refers to a distributed cloud where users are accessing end-user services provided by applications that are hosted in the distributed cloud and where users are accessing the service via a mobile network. The application that provides the end-user service may be a distributed application deployed across multiple cloud locations. It may also be an application where individual application instances are deployed at multiple cloud locations. In both cases we will refer to the instantiation of an application or application component at a cloud location as an application instance. The mobile network carries user traffic between the UE and a communication anchor point. The anchor point herein meaning a point or node that terminates a mobile network user plane session at a data network. The data network may be identified by an identifier such as a data network access identifier (DNAI). The anchor point may e.g. in 5G be referred to as a protocol data unit (PDU) session anchor (PSA) user plane function (UPF) node. The user traffic is further carried between the anchor point and an application instance in the edge cloud node via the data network.

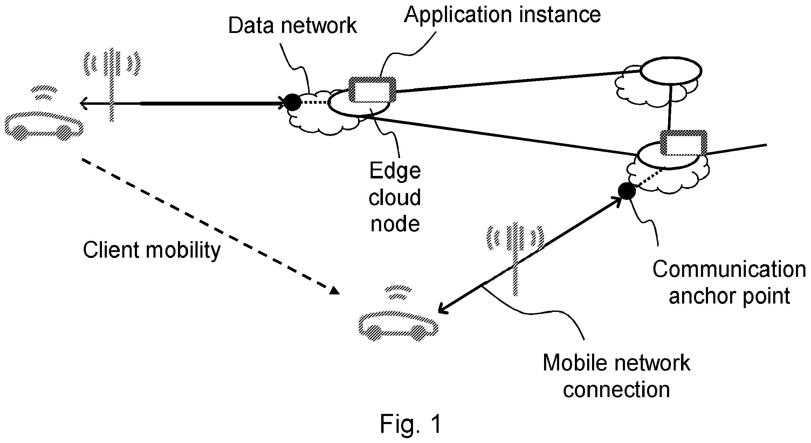

In order to exploit the geographical and topological distribution of edge cloud nodes, coordination between the mobile access networks and the edge cloud and/or the end-user service application is required to make sure UEs are served from a communication anchor point in the mobile access network which is close to the edge cloud location hosting the application instance which is serving the UE. **Fig. 1** shows an edge cloud with nodes at multiple locations, where the end-user service is provided by an application with application instances at all or a subset of edge cloud locations, where the mobile network is capable of carrying user traffic between the client and more than one communication anchor point, and where the optimal selection of anchor point for a particular UE depends on the UE location and the subset of edge cloud nodes that are hosting the application instance. Coordination is needed for handling e.g. edge site selection and edge site handover of clients served by the edge cloud via the mobile access network.

In existing deployments of distributed cloud, the degree of distribution is limited. Larger cloud providers offer limited distribution with few (if any) sites per country. Workload placement in the distributed cloud is optimized independently from the access network. In typical mobile network deployments, the number of communication anchor points per country are few. The selection of anchor point for a UE is static or semi-static and often based on the subscriber home address. It is primarily during roaming in another operator's mobile network that an alternative communication anchor point is selected for the UE in the visited mobile network operator.

In order to allow new edge-based end-user services to exploit further distribution of the cloud, several changes in the mobile networks are required. Additional communication anchor points are needed and clients should be able to flexibly handover between communication anchor points based on different optimization objectives.

In the context of 5G core network (5GC) new mechanisms are introduced to support local breakout in mobile packet core. These mechanisms will enable a more access near edge cloud and the benefits it may bring such as latency reduction and resource efficiency. It also introduces requirements on the handling the coordination between mobile access network and distributed cloud.

A problem in an edge cloud is how to configure an edge connectivity service (ECS) to a client UE. This is a problem since mobile connectivity traditionally is configured by the mobile operator in agreement with the UE, e.g. via a subscription. However, in an edge cloud ecosystem, the connectivity requirements depend critically on the application and its distribution across edge sites and it may be difficult to exploit the advantages that distribution could bring in terms of service performance.

WO 2019/035406 A1 discloses how to extend the architecture's Application Function (AF), which is deployed in the networks where corresponding services are operated, to request and receive policy information from the nextgen control plane for local enforcement on the data plane. WO 2014/139553 A1 discloses a method for sending a request from an application server functionality to a policy server functionality, storing local application policy for a user equipment, and receiving information from said policy server functionality. WO 2017/100640 A1 discloses method and apparatuses for enabling third party edge clouds at the mobile edge. US 2018/317157 A1 discloses an apparatus and method for steering a protocol data unit session associated with traffic routed to a selected user plane function.

### SUMMARY

An object herein is to improve provisioning of application dependent connectivity services to UEs in a more efficient manner.

According to a first aspect the object is achieved by providing a method performed by a network node for handling a service request for an edge connectivity service from an application server in a communication network. The application server comprises an application providing an end-user service to a user equipment, The edge connectivity service is a connectivity between the application and the user equipment accessing the end-user service. The method comprises configuring the application with the edge connectivity service for the user equipment. Configuring comprises setting up configuration for the edge connectivity service by negotiating with the application server for determining the configuration of the edge connectivity service and by registering the edge connectivity service with the configuration for the application. Configuring further comprises receiving the service request for the edge connectivity service from the application server. The service request comprises an indication of the user equipment. Configuring further comprises setting up a configuration of one or more radio network nodes of a radio access network for providing the edge connectivity service to the user equipment.

According to a second aspect a network node for handling a service request for an edge connectivity service from an application server in a communication network is provided. The application server comprises an application providing an end-user service to a user equipment. The edge connectivity service is a connectivity between the application and the user equipment accessing the end-user service. The network node is configured to configure the application with the edge connectivity service for the user equipment by being configured to set up configuration for the edge connectivity service by negotiating with the application server for determining the configuration of the edge connectivity service and registering the edge connectivity service with the configuration for the application. The network node is configured to configure the application with the edge connectivity service for the user equipment by further being configured to receive the service request for the edge connectivity service from the application server, wherein the service request comprises an indication of the user equipment. The network node is configured to configure the application with the edge connectivity service for the user equipment by further being configured to setup a configuration of one or more radio network nodes of a radio access network for providing the edge connectivity service to the user equipment.

According to a third aspect it is provided herein a computer program product. The computer program product comprises instructions, which, when executed on at least one processor of a network node, cause the network node to carry out the method according to the first aspect.

According to a fourth aspect, it is provided herein a computer-readable storage medium, having stored thereon a computer program product comprising instructions which, when executed on at least one processor of a network node, cause the network node to carry out the method according to the first aspect.

The invention is defined by a method according to claim 1, a network node according to claim 4, a computer program product according to claim 7 and a computer-readable storage medium according to claim 8. Preferred embodiments are defined by the dependent claims.

Embodiments herein provide the application with an ability to flexibly request configuration of an edge connectivity service (ECS) that meets the application requirements and to provide ECS to UEs accessing a service provided by the application such as a cloud application e.g. the application may be a distributed application.

Embodiments herein enable optimization of edge connectivity services depending on use cases that put different requirements on edge connectivity, e.g. high volume data vs real

time applications, applications with large or limited distribution etc. An optimized use of infrastructure may be provided by providing flexible edge connectivity services to different applications by allowing application controlled configuration and provisioning of the edge connectivity service to capture the requirements from the application. Embodiments herein may facilitate evolution of the edge ecosystem by providing a flexible infrastructure instead of one size fits all and by providing a simple interface for configuring an edge connectivity service.

### BRIEF DESCRIPTION OF THE DRAWINGS

Embodiments will now be described in more detail in relation to the enclosed drawings, in which:
- Fig. 1: is a schematic overview depicting a communication network using edge clouds;
- Fig. 2: is a schematic overview depicting a communication network according to embodiments herein;
- Fig. 3: shows a method performed by a network node according to embodiments herein;
- Fig. 4a: shows a combined flowchart and signalling scheme according to embodiments herein;
- Fig. 4b: shows a combined flowchart and signalling scheme according to embodiments herein;
- Fig. 5a: shows a combined flowchart and signalling scheme according to embodiments herein;
- Fig. 5b: shows a schematic flowchart depicting a method performed by a network node according to embodiments herein;
- Fig. 6: is a block diagram depicting a network node according to embodiments herein;
- Fig. 7: shows a telecommunication network connected via an intermediate network to a host computer in accordance with some embodiments;
- Fig. 8: shows a host computer communicating via a base station with a user equipment over a partially wireless connection in accordance with some embodiments;
- Fig. 9: shows methods implemented in a communication system including a host computer, a base station and a user equipment in accordance with some embodiments;
- Fig. 10: shows methods implemented in a communication system including a host computer, a base station and a user equipment in accordance with some embodiments;
- Fig.11: shows methods implemented in a communication system including a host computer, a base station and a user equipment in accordance with some embodiments; and
- Fig. 12: shows methods implemented in a communication system including a host computer, a base station and a user equipment in accordance with some embodiments.

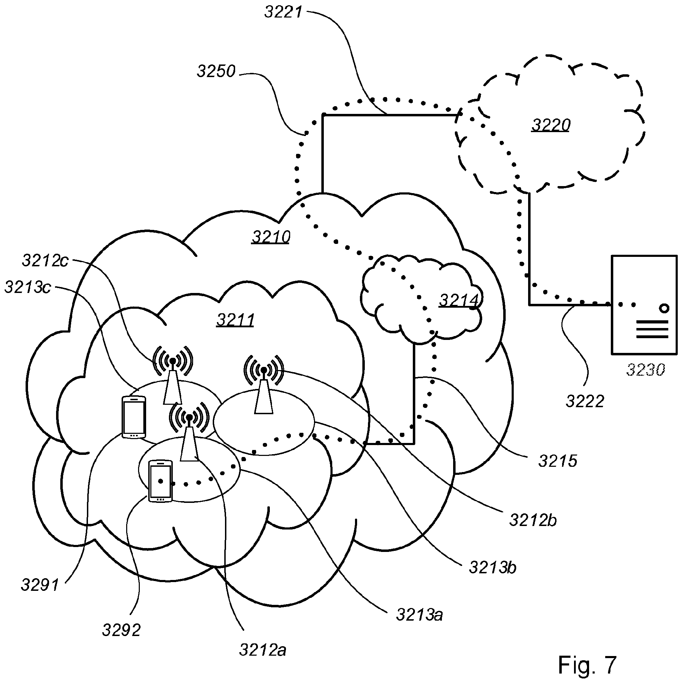

The embodiments related to Fig. 7 to Fig. 12 are not covered by the claimed invention.

### DETAILED DESCRIPTION

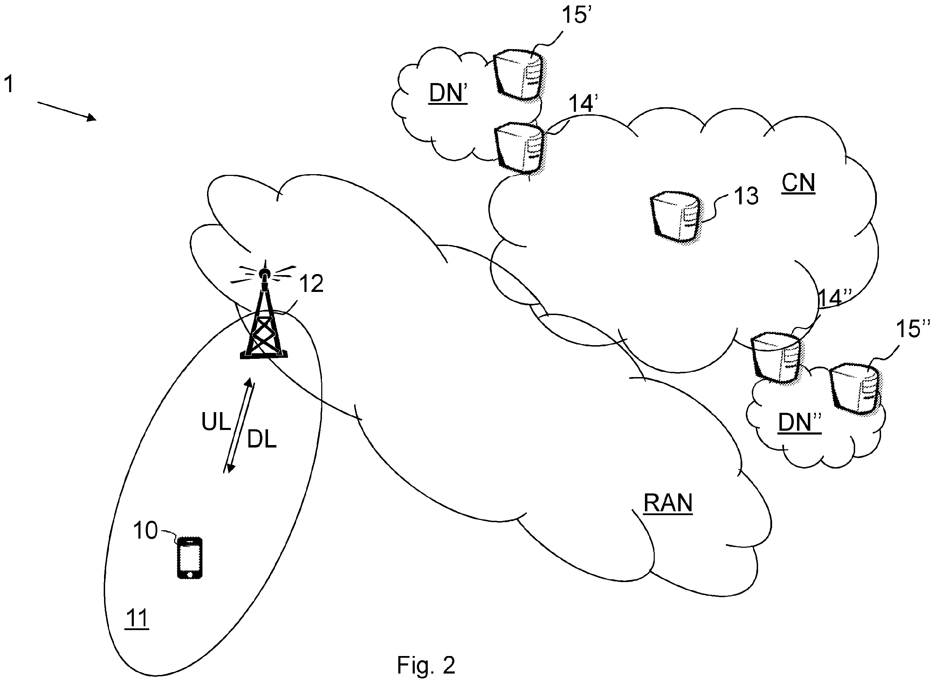

Embodiments herein relate to communication networks in general. **Fig. 2** is a schematic overview depicting **a communication network 1.** The communication network 1 comprises one or more mobile access networks such as RANs and one or more CNs. The communication network 1 may use one or a number of different technologies. Embodiments herein relate to recent technology trends that are of particular interest in a 5G context; however, embodiments are also applicable in further development of existing communication systems such as e.g. LTE and Wideband Code Division Multiple Access (WCDMA).

In the communication network 1, UEs are configured to communicate with the CN or with one another e.g. **a UE 10,** such as a mobile station, a non-access point station (non-AP STA), a STA, a wireless device and/or a wireless terminal, may be configured for communication. It should be understood by the skilled in the art that "UE" is a non-limiting term which means any terminal, wireless communication terminal, user equipment, narrowband-internet of things (NB-loT) device, Machine Type Communication (MTC) device, Device to Device (D2D) terminal, or node e.g. smart phone, laptop, mobile phone, sensor, relay, mobile tablets or even a small base station capable of communicating using radio communication with a radio network node or a wireless device.

The communication network 1 comprises **a radio network node 12** , also referred to as a first radio network node, providing radio coverage over a geographical area, **a service area 11,** of a first radio access technology (RAT), such as NR or similar. The radio network node 12 may be a transmission and reception point such as an access node, an access controller, a base station, e.g. a radio base station such as a gNodeB (gNB), an evolved Node B (eNB, eNode B), a NodeB, a base transceiver station, a radio remote unit, an Access Point Base Station, a base station router, a Wireless Local Area Network (WLAN) access point or an Access Point Station (AP STA), a transmission arrangement of a radio base station, a stand-alone access point or any other network unit or node capable of communicating with a wireless device within the area served by the radio network node 12 depending e.g. on the first radio access technology and terminology used. The radio network node 12 may be referred to as a serving radio network node wherein the service area may be referred to as a serving cell, and the serving network node communicates with the UE 10 in form of DL transmissions to the wireless device 10 and UL transmissions from the wireless device 10. It should be noted that a service area may be denoted as cell, beam, beam group or similar to define an area of radio coverage. The radio network node 12 may beamform its transmissions towards one or more wireless devices such as the UE 10. Beamforming allows the signal to be stronger for an individual connection.

The communication network 1 further comprises a **network node 13** referred to as control node or node with edge connectivity service which is a network node such as a server or a function collocated with another network node such as a mobility management entity (MME) or Access and Mobility Management function (AMF) node, or a standalone node. Furthermore, the communication network comprises a number of other network node such as AMF nodes that supports termination of non-access stratum (NAS) signalling, NAS ciphering & integrity protection, registration management, connection management, mobility management, access authentication and authorization, security context management. Session Management function (SMF) node which supports: session management (session establishment, modification, release), UE IP address allocation & management, DHCP functions, termination of NAS signalling related to session management, DL data notification, traffic steering configuration for UPF for proper traffic routing. User plane function (UPF) node which supports: packet routing & forwarding, packet inspection, quality of service (QoS) handling, acts as external protocol data unit (PDU) session point of interconnect to Data Network (DN), and is an anchor point for intra- & inter-RAT mobility. Other possible nodes or functions may be a Policy Control Function (PCF) node which supports: unified policy framework, providing policy rules to control plane (CP) functions, access subscription information for policy decisions in Unified Data Repository (UDR). Authentication Server Function (AUSF) node which acts as an authentication server. Unified Data Management (UDM) node which supports: generation of Authentication and Key Agreement (AKA) credentials, user identification handling, access authorization, subscription management. Application Function (AF) node which supports: application influence on traffic routing, accessing NEF, interaction with policy framework for policy control. Network Exposure function (NEF) node which supports: exposure of capabilities and events, secure provision of information from external application to 3GPP network, translation of internal/external information. NF Repository function (NRF) node which supports: service discovery function, maintains NF profile and available NF instances.

The communication network 1 further comprises **one or more data network nodes 14'** and **14",** also referred to as an anchor point node such as a gateway nodes, user plane function (UPF) node or similar. The one or more data network nodes provides access to data network of the communication network from e.g. different operator networks or similar.

The communication network 1 may further comprise one or more application nodes or **an application servers 15', 15"** also referred to as application server 15 comprising an application or a service which in turn is using an edge connectivity service for connectivity between application instances hosted at the edge in e.g. the application servers 15' and 15" and UEs that are accessing the end-user service provided by the application. The application server 15 may be referred to as cloud application node or similar and may comprise at least part of the application. The application, that provides the end-user service, may be a distributed application deployed across multiple locations referred to as distributed networks (DN), DN' and DN". It may also be an application where individual application instances are deployed at multiple cloud locations. The method according to embodiments herein is performed by the network node 13. As an alternative, a Distributed Node and functionality, e.g. comprised in a cloud, may be used for performing or partly performing the method.

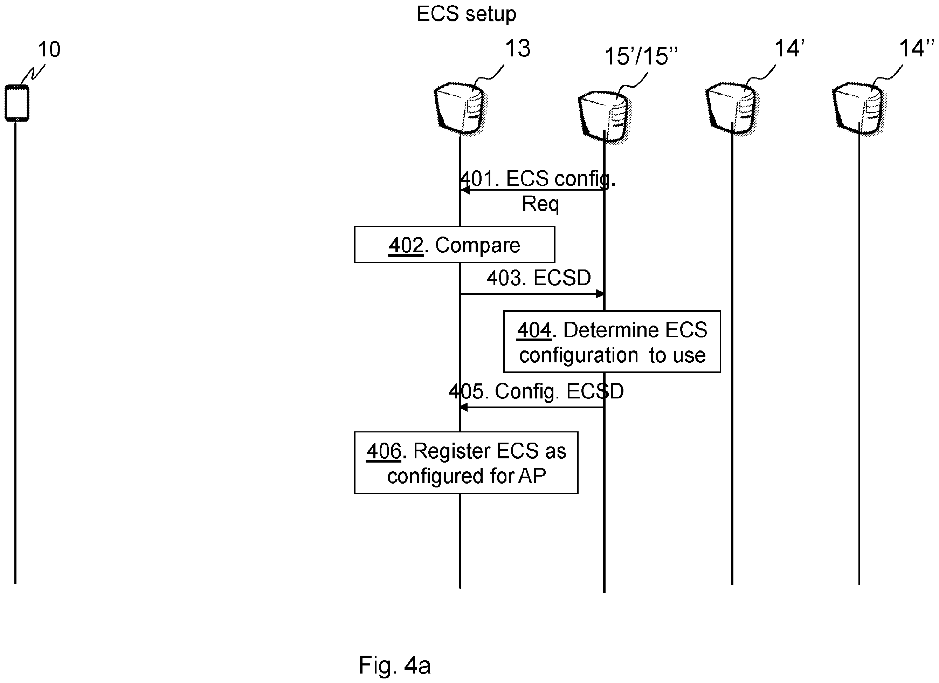

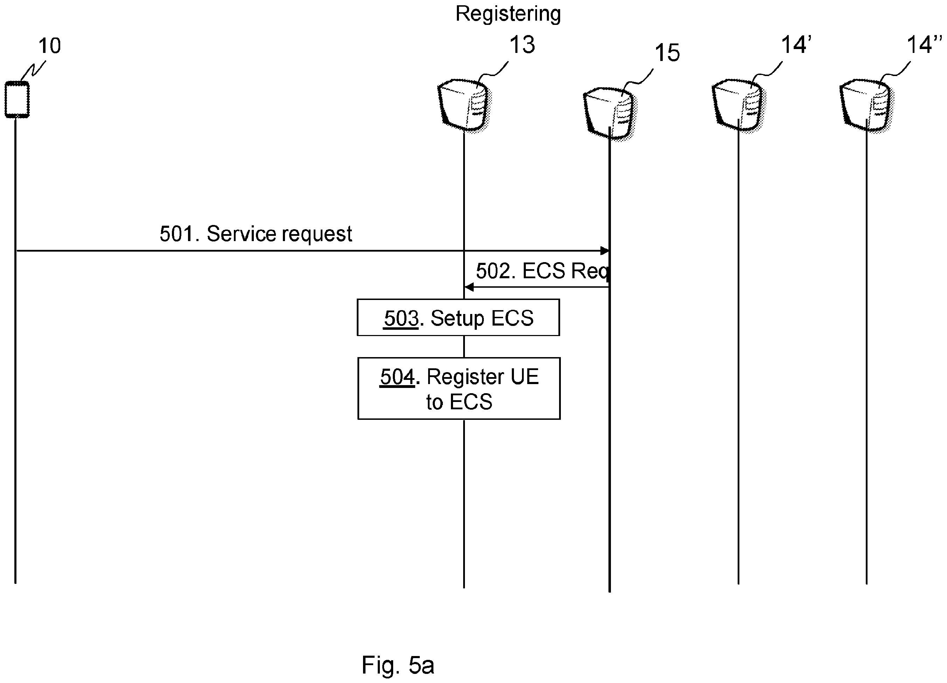

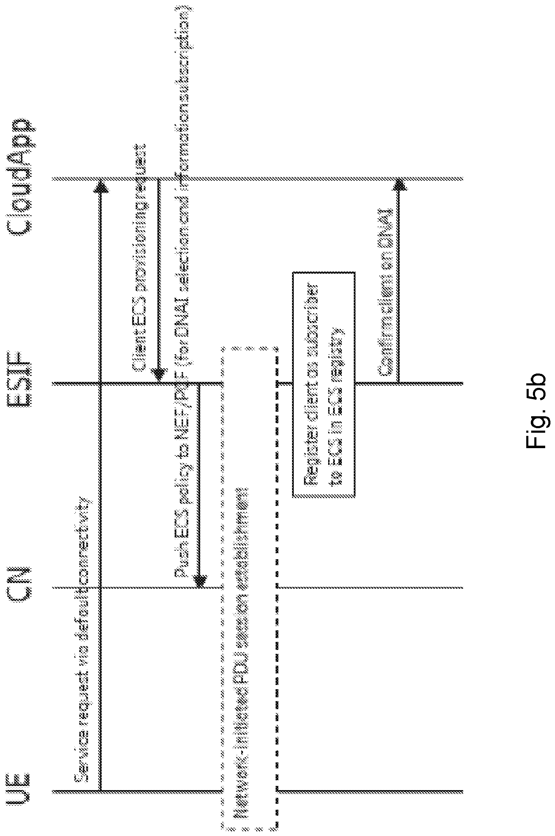

Embodiments herein enable an application, also referred to as cloud application, to configure an edge connectivity service (ECS) and provision the ECS to one or more UEs. The embodiments herein may use the network node 13 e.g. an edge system interface function (ESIF) in the network node 13, which interfaces the application as well as the packet core of the mobile access network and provides an additional functionality for providing ECSs. The network node 13 may be part of the operator domain. Figs. 4a-4b disclose for configuring the ECS with input from the application. Figs. 5a-5b describe provisioning ECS of the application to the UE 10.

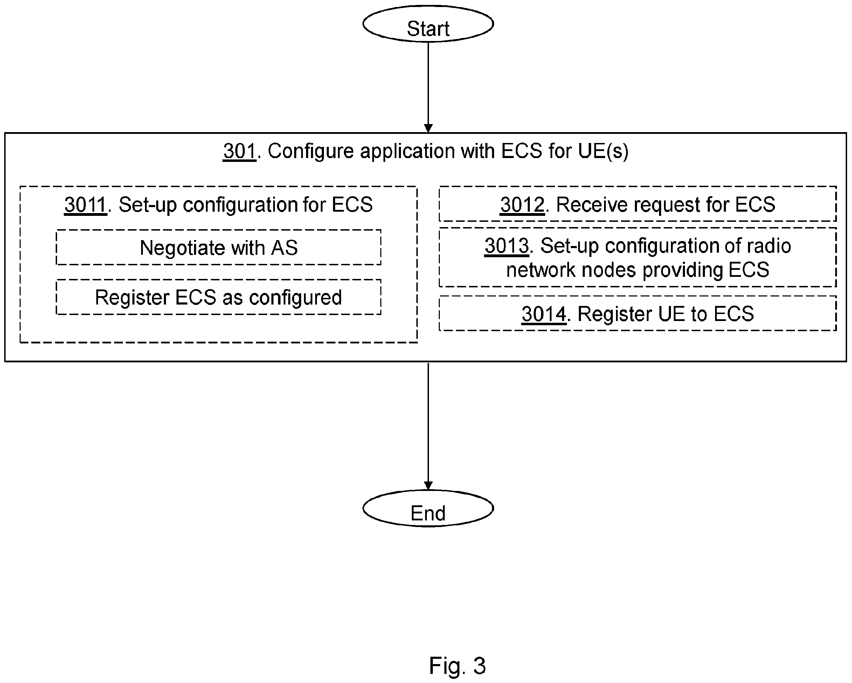

The method actions performed by the network node 13 also referred to as ECS node for handling a service request for a connectivity service from an application of the application server 15 in the communication network 1 according to embodiments will now be described with reference to a flowchart depicted in **Fig. 3****.** The actions do not have to be taken in the order stated below, but may be taken in any suitable order. Actions performed in some embodiments are marked with dashed boxes.

**Action 301.** The network node 13 configures the application with an edge connectivity service for the UE 10. The network node 13 may setup the ECS and/or register the UE 10 to the ECS.

**Action 3011.** The network node 13 is configured to set-up configuration for the edge connectivity service. This is performed by the network node negotiating with the application server 15 for determining the configuration of the edge connectivity service. The network node 13 registers the edge connectivity service with the configuration for the application, and thus, the configuration of the service is completed and network node 13 registers the ECS as a service provided to the application and is now ready to be used. This is illustrated in Figs. 4a-4b. The configuration for the edge connectivity service may comprise one or more of: policy of a handover to a second anchor point from a first anchor point based on a location of the UE 10; one or more identities of anchor points; quality of service (QoS) parameters; traffic classifier rules to which the ECS applies e.g. rules are DNAI specific; and level of involvement of the application in a handover. The configuration may comprise one or more service parameters as indicated in Fig. 4a.

**Action 3012.** Additionally, the network node 13 receives a request such as a service request for the edge connectivity service from the application server 15, wherein the request comprises an indication of the UE 10.

**Action 3013.** The network node 13 is configured to set-up a configuration of one or more radio network nodes of a radio access network for providing the edge connectivity service to the UE 10.

**Action 3014.** The network node 13 may register the UE 10 to the edge connectivity service.

Embodiments herein provide the application with an ability to flexibly request configuration of an edge connectivity service (ECS) that meets one or more application requirements and to provision that ECS to clients accessing a service provided by the application. Embodiments provide the benefit of e.g. enable optimization of edge connectivity services depending on use cases that put different requirements on edge connectivity, e.g. high volume data vs real time applications, applications with large or limited distribution etc.. Embodiments herein may optimize use of infrastructure by providing flexible edge connectivity services to different applications by allowing cloud application controlled configuration and provisioning of the edge connectivity service to capture the requirements from the cloud application. Embodiments herein mayfacilitate evolution of the edge ecosystem by providing a flexible infrastructure instead of one size fits all and by providing a simple interface for configuring an edge connectivity service.

**Fig. 4a** is a combined flowchart and signaling scheme according to embodiments herein. The actions do not have to be taken in the order stated below, but may be taken in any suitable order. Actions performed in some of the embodiments are marked as dashed boxes. Fig. 4a discloses a method of configuring the ECS as shown in action 3011 in Fig. 3.

**Action 401.** The network node 13 exposes an interface, also referred to as ESIF, to one or more applications running on the application server 15 for requesting configuration of an ECS. The application server 15 uses the ESIF to submit, i.e. transmits, a request such as an ECS configuration request (see below) that contains one or more service parameters associated with the desired ECS. The one or more service parameters may include 3GPP defined connectivity parameters as well as edge specific parameters that describe edge related behavior, e.g. inter-edge handover, etc. The following information may be part of the ECS configuration request:
- a data network access identity (DNAI) list e.g. in case requested
   ∘ each DNAI represents an anchor point, e.g. a UPF node, for a location of edge located radio network nodes. The set of DNAIs belonging to the ECS may depend on the application. E.g. the application may exist at application server one via e.g. UPF1, and application server three via e.g. UPF3, but not application server two e.g. UPF2. In that case the ECS may exclude UPF2.
   ∘ For each DNAI there may be an associated uplink traffic classifier rule specifying a subset of traffic that should be forwarded to the DNAI, e.g. a destination IP address range.
- 3GPP defined connectivity parameters e.g. in case requested
   ∘ QoS parameters such as signal to interference plus noise ratio (SINR), signal to noise ratio (SNR), throughput, latency or similar.
- Service continuity mode (SSC) e.g. in case requested
   ∘ SSC is defined in 3GPP as related to handover behavior between communication anchor points i.e. DNAIs
      ▪ SSC mode 1 (no change of communication anchor point)
      ▪ SSC mode 2 (break-before-make)
      ▪ SSC mode 3 (make-before-break)
- Application influence e.g. in case requested
   ∘ specify involvement of the application of the application server in events such as DNAI handover:
      ▪ None;
      ▪ early notification e.g. the application subscribes to information notification on handover before it is done;
      ▪ late notification e.g. the application subscribes to information notification on handover after it is done;
      ▪ handover approvals e.g. the application requests to be involved in handover and approve any handover before executed.
- Service parameter priority
   ∘ each service parameter above could be appended a priority parameter in case all requirements cannot be fulfilled, where for example value 1 could signify a hard requirement, whereas subsequent values (2, 3, 4, ...) signify descending priority. Thus, ranking the service parameters internally.

**Action 402.** The network node 13 receives the ECS configuration request and compares the ECS configuration request with an internal registry of service capabilities of the associated mobile access network i.e. the RAN. The network node 13 may check available support in the RAN for the information indicated in the ECS configuration request. Service capabilities may comprise e.g. registered capabilities of the mobile access network related to ECS such as:
- DNAI list (all DNAIs that can be used by ESIF)
   ∘ Specification of the type of DNAI and whether it is associated with e.g, an IP anchor for the UE
- QoS profiles (range of supported options)
   ∘ List of predefined profiles or full range of supported 3GPP supported defined connectivity parameters
- Service continuity mode (supported options)
   ∘ SSC mode 1 (y/n)
   ∘ SSC mode 2 (y/n)
      ▪ Optionally groups of DNAIs between which SSC mode 2 is supported
   ∘ SSC mode 3 (y/n)
      ▪ Optionally groups of DNAIs between which SSC mode 2 is supported
   ∘ SSC mode 3 (y/n)
      ▪ Optionally groups of DNAIs between which SSC mode 3 is supported
- Application influence (supported options)
   ∘ None (y/n)
   ∘ Early notification (y/n)
   ∘ Late notification (y/n)
   ∘ Handover approvals (y/n)

**Action 403.** The network node 13 responds to the application server 15 with an ECS description (ECSD) that matches at least partly the ECS configuration request based on available capabilities. Prioritization of service parameters may be required to produce the ECSD. Such priorities may be preconfigured in ESIF or provided by the application as part of the ECS configuration request. The ECSD may comprise one or more of the following:
- DNAI list (and if applicable classifier rules) e.g. confirmed
- QoS profile, e.g. 3GPP TS23.501-5.7.1.2 , e.g. confirmed
- Service continuity mode, e.g. confirmed
- Application influence, e.g. confirmed

**Action 404.** The application server or the application determines ECS configuration to use based on the received ECSD and application requirements. Further negotiation between the network node 13 and the application may be needed to agree on an ECSD. E.g. instead of accepting the ECSD, the application may submit a modified ECS configuration request which generates an updated ECSD from the network node 13. ECS may also complement the ECSD with information on service capabilities in order to facilitate for the application to modify the ECS configuration request.

**Action 405.** Once the ECSD generated by the network node 13 is accepted by the application, the application server 15 transmits an ECSD configuration request to instruct the network node 13 to configure the confirmed ECSD.

**Action 406.** The network node 13 receives the ECSD configuration request and performs necessary configurations. The network node 13 may register the ECS as configured for the application. The network node 13 may define policies for DNAI selection (i.e. defines service areas, such as geographical service areas, for the communication anchor points, i.e. DNAIs, that are part of the ECSD). Thus, the network maintaining the provisioned service according to the ECS description e.g. handling of application influence on handovers.

The network node 13 may maintain a registry of configured ECSs. For each ECS entry the following information may be included:
- ECSID
   ∘ ECS identity
- ECSD
   ∘ See "ECS description"
- CloudApplDs (Cloud applications registered to ECSID)
   ∘ List of applications that are registered as users of the ECSID (e.g. application that requested configuration of ECS)
- ClientIDs e.g. Generic Public Subscription Identifier (GPSI), ClientApplDs, Current DNAls (optional)
   ∘ Clients provisioned to ECS and corresponding application identifier that requested client provisioning
   ∘ ESIF may track current DNAls of client UEs in order to respond to query from cloud application
- Policy info
   ∘ DNAI selection policy (UPF selection policy information)

E.g. if ECSD includes a notification of DNAI handover, the network node 13 may receive notifications originating from a SMF node related to DNAI handover. These notifications may be forwarded to the application. If the ECSD includes e.g. an application involvement in DNAI handover, 3GPP extensions may be needed. Extensions to NEF/PCF/SMF messaging such that SMF node may request AF approval for UPF handover, e.g. specifying target DNAI for ClientID, via PCF/NEF and extensions such that AF may respond to the request by SMF via NEF/PCF. The network node 13 may then receive handover approval requests originating from the SMF node, and the network node 13 may coordinate approval with the application on the application server 15.

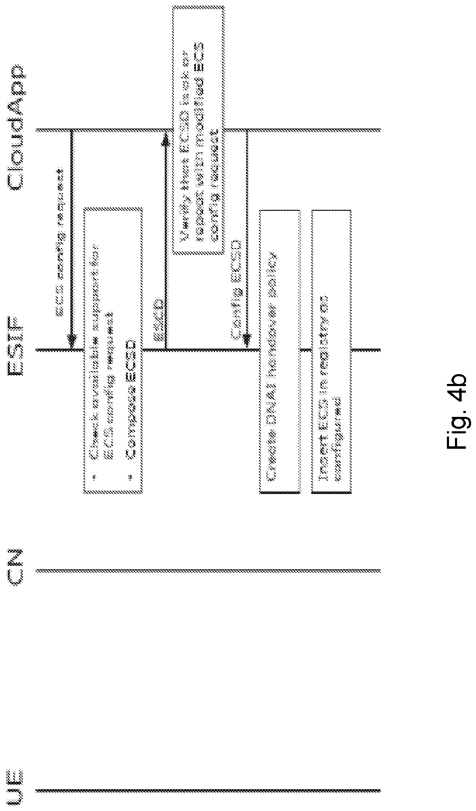

**Fig. 4b** shows an example when the network node 13 is exemplified as an ESIF and the application is exemplified as a cloud application. The following steps may be performed to configure an ECS at the network node 13:
- ESIF exposes an interface to cloud applications for requesting configuration of an ECS. The cloud application uses this interface to submit an ECS configuration request that contains service parameters associated with the desired ECS. The service parameters may include 3GPP defined connectivity parameters as well as edge specific parameters that describe edge related behavior (inter-edge handover, etc).
- ESIF receives the ECS configuration request and compares it with an internal registry of service capabilities of the associated mobile access network. Information contained in this registry.
- ESIF responds with an ECS description (ECSD) that best matches the request based on available capabilities. Prioritization of service parameters may be required to produce the ECSD. Such priorities may be preconfigured in ESIF or provided by the cloud application as part of the ECS configuration request.
- Further negation between ESIF and the cloud application may be needed to agree on an ECSD.
   ∘ Instead of accepting the ECSD, the cloud application may submit a modified ECS configuration request which generates an updated ECSD from ESIF. ECS may also complement the ECSD with information on service capabilities in order to facilitate for the cloud application to modify the ECS configuration request.
- Once the ECSD generated by ESIF is accepted by the cloud application, it submits a ECSD configuration request to instruct ESIF to configure the confirmed ECSD
- ESIF receives the ECSD configuration request and performs necessary configurations
   ∘ ESIF defines policies for DNAI selection (i.e. defines service areas for the communication anchor points, i.e. DNAIs, that are part of the ECSD).
   ∘ ESIF adds an entry in its registry for configured ECSs and inserts the ECSD as well as the policy information related to DNAI selection.

**Fig. 5a** is a combined flowchart and signaling scheme according to embodiments herein. The actions do not have to be taken in the order stated below, but may be taken in any suitable order. Actions performed in some of the embodiments are marked as dashed boxes. Fig. 5a discloses a method of providing ECS to a UE as shown in actions 3012-3014 in Fig. 3.

**Action 501.** The UE transmits a service request to the application or the application server 15. The application may provide ECS enablement.

**Action 502.** The application server transmits a service request such as a ECS request to the network node 13 such as the ECS server. Thus, to provide a configured ECS to the UE 10, the application submits a provisioning request to the network node 13 comprising one or more of the following: the ID of the UE such as as a client ID (ClientID - GPSI/IP/MAC), application identity such as a client application identity (ClientAppID); and identity of the configured ECS (ECSID). The application may have received UE ID and application ID in a service request from the UE 10.

**Action 503.** The network node 13 may setup the ECS for the UE as requested. E.g. the network node 13 may configure the mobile packet core to provide the requested service to the UE 10. E.g. the network node 13 may submit policy information for DNAI selection associated with the ECSID to the mobile packet core. The network node may use AF requests (3GPP TS 23.501-5.6.7) related to policies for UPF selection. The AF requests are sent either directly to the PCF(s) via N5 or via NEF (depending on operator configuration). The PCF(s) transform(s) the AF requests into policies that apply to PDU Sessions and used by SMF node. The AF request used by the network node 13 may include the following 3GPP defined entries:
▪ Potential Locations of Applications: DNAI list from ECSD
▪ Target UE Identifier(s): ClientID, i.e. GPSI/Subscription Permanent Identifier (SUPI)/IP/MAC
▪ Information on AF subscription to corresponding SMF events: Early/Late notification (3GPP TS 23.501-5.6.7) depending on application influence defined in ECSD.
▪ **3GPP extension:** To support application involvement on the ECSD level "Handover approval" for the case where DNAI handover is handled by SMF, extensions to 3GPP TS 23.501 may be needed
   - Extension with to 3GPP TS 23.501-5.6.7 with additional field e.g. "Influence of AF corresponding to SMF events:" where AF may request that it must approve any UPF change before carried out
   - Extension of 3GPP TS 23.501-6.3.3 where AF approval may be required by SMF before changing to selected UPF/DNAI. Also policy related to case where AF rejects change, i.e. time-out value until new AF approval request is set by SMF.

The network node 13 may further initiate a 3GPP defined network triggered PDU Session Establishment procedure (3GPP TS 23.502 - 4.3.2). The network node 13 may do this by invoking an application trigger to the UE via NEF. (TS23.502 - 4.13.2). The network node 13 then sends a device trigger message to the application (ClientAppID) on the UE side. The payload included in the device trigger message may contain information on which application (ClientAppID) on the UE side is expected to trigger the PDU Session establishment request. This may be an identifier of the client application associated with the application.

The client application (ClientAppID) on the UE side may trigger the PDU Session Establishment procedure. This is a NAS Message containing the following info: S-NSSAI(s), DNN, PDU Session ID, Request type, Old PDU Session ID, N1 SM container (PDU Session Establishment Request)

During the PDU session establishment procedure the SMF node associated with the UE 10 does UPF selection (e.g. as stated in TS23.501-6.3.3.3) based on policies that network node provided via PCF/NEF in a previous step. A notification of current DNAI is sent to the network node 13 if request by the network node in policy.

**Action 504.** The network node 13 may then register the UE 10 to the ECS e.g. together with identifier of the application. E.g. the network node 13 may register ClientID (GPSI) as a subscriber to ECSID in its ECS registry together with associated application identifiers (CloudAppID, ClientApplD) and current DNAI. The edge connectivity service is now available to the UE 10 and the network node 13 may confirm to the application that the service has been provisioned to the UE as well as current DNAI.

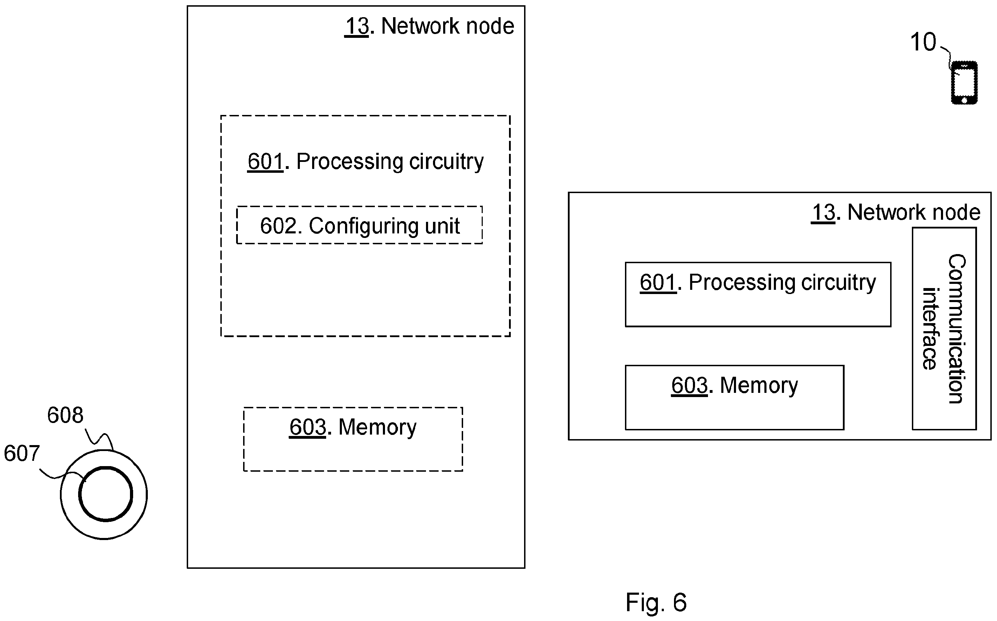

**Fig. 6** is a block diagram depicting the network node 13, in two embodiments, for handling a service request for a connectivity service such as enabling the application providing ECS in the wireless communication network according to embodiments herein.

The network node 13 may comprise **processing circuitry 601,** e.g. one or more processors, configured to perform the methods herein.

The network node 13 may comprise **a configuring unit 602.** The network node 13, the processing circuitry 601, and/or the configuring unit 602 is configured to configure the application with an edge connectivity service for a UE 10.

The network node 13, the processing circuitry 601, and/or the configuring unit 602 may be configured to configure the application by being configured to set up configuration for the edge connectivity service.

The network node 13, the processing circuitry 601, and/or the configuring unit 602 may be configured to set up the configuration by being configured to negotiate with the application server for determining the configuration of the edge connectivity service.

The network node 13, the processing circuitry 601, and/or the configuring unit 602 may be configured to configure the application by registering the edge connectivity service with the configuration for the application.

The network node 13, the processing circuitry 601, and/or the configuring unit 602 may be configured to configure the application by being configured to receive a request for the edge connectivity service from the application server, wherein the request comprises an indication of the user equipment; and to setup a configuration of one or more radio network nodes of a radio access network for providing the edge connectivity service to the user equipment.

The network node 13, the processing circuitry 601, and/or the configuring unit 602 may be configured to configure the application by being configured to register the user equipment to the edge connectivity service.

The configuration for the edge connectivity service comprises one or more of:
policy of a handover to a second anchor point from a first anchor point based on a location of the user equipment; one or more identities of anchor points; quality of service, QoS, parameters; and level of involvement of the application in an handover. The radio network node 13 further comprises **a memory 603.** The memory 603 comprises one or more units to be used to store data on, such as signal strengths or qualities, mappings of TA to anchor points, service IDs, UE IDs of subscribing UEs, applications to perform the methods disclosed herein when being executed, and similar. The network node 13 may further comprise a communication interface comprising e.g. one or more antenna or antenna elements.

The methods according to the embodiments described herein for the network node 13 are respectively implemented by means of e.g. **a computer program product 607** or a computer program, comprising instructions, i.e., software code portions, which, when executed on at least one processor, cause the at least one processor to carry out the actions described herein, as performed by the network node 13. The computer program product 607 may be stored on **a computer-readable storage medium 608,** e.g. a disc, a universal serial bus (USB) stick or similar. The computer-readable storage medium 608, having stored thereon the computer program product, may comprise the instructions which, when executed on at least one processor, cause the at least one processor to carry out the actions described herein, as performed by the network node 13. In some embodiments, the computer-readable storage medium may be a transitory or a non-transitory computer-readable storage medium.

In some embodiments a more general term "network node" is used and it can correspond to any type of radio-network node or any network node, which communicates with a wireless device and/or with another network node. Examples of network nodes are NodeB, gNodeB, eNodeB, MeNB, SeNB, a network node belonging to Master cell group (MCG) or Secondary cell group (SCG), base station (BS), multi-standard radio (MSR) radio node such as MSR BS, eNodeB, network controller, radio-network controller (RNC), base station controller (BSC), relay, donor node controlling relay, base transceiver station (BTS), access point (AP), transmission points, transmission nodes, Remote radio Unit (RRU), Remote Radio Head (RRH), nodes in distributed antenna system (DAS), etc.

In some embodiments the non-limiting term wireless device or user equipment (UE) is used and it refers to any type of wireless device communicating with a network node and/or with another wireless device in a cellular or mobile communication system. Examples of UE are target device, device to device (D2D) UE, proximity capable UE (aka ProSe UE), machine type UE or UE capable of machine to machine (M2M) communication, Tablet, mobile terminals, smart phone, laptop embedded equipped (LEE), laptop mounted equipment (LME), USB dongles etc.

Embodiments are applicable to any RAT or multi-RAT systems, where the wireless device receives and/or transmit signals (e.g. data) e.g. New Radio (NR), Wi-Fi, Long Term Evolution (LTE), LTE-Advanced, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

As will be readily understood by those familiar with communications design, that functions means or units may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware and/or program or application data. Other hardware, conventional and/or custom, may also be included. Designers of communications devices will appreciate the cost, performance, and maintenance trade-offs inherent in these design choices.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

With reference to **Fig. 7****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the wireless device 10, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Fig. 7 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

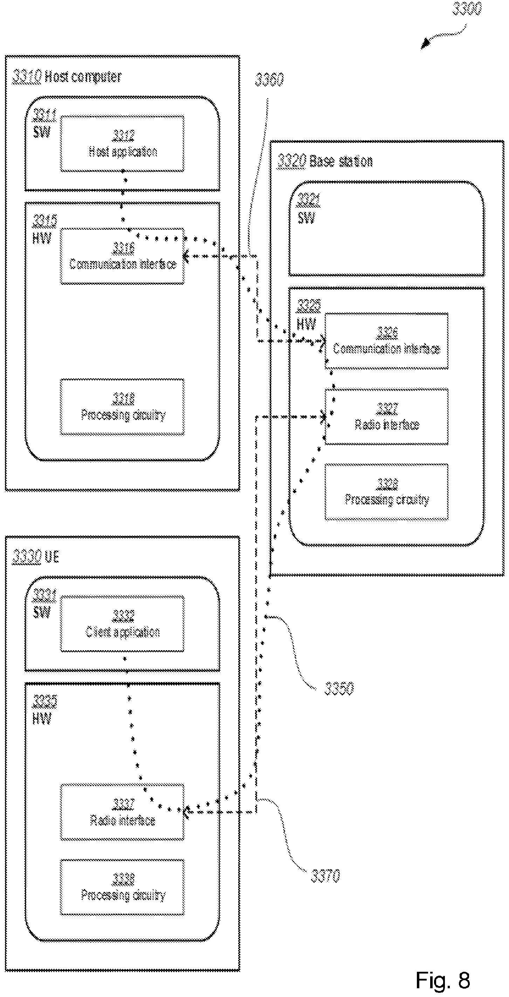

Example implementations, in accordance with an embodiment, of the UE, base station and host computer discussed in the preceding paragraphs will now be described with reference to **Fig. 8****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig. 8) served by the base station 3320. The communication interface 3326 may be configured to facilitate a connection 3360 to the host computer 3310. The connection 3360 may be direct or it may pass through a core network (not shown in Fig. 8) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig. 8 may be identical to the host computer 3230, one of the base stations 3212a, 3212b, 3212c and one of the UEs 3291, 3292 of Fig. 7, respectively. This is to say, the inner workings of these entities may be as shown in Fig. 8 and independently, the surrounding network topology may be that of Fig. 7.

In Fig. 8, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve usage of resources since the mitigation scheme is used based on the load in a neighboring radio network node resulting in an efficient use of resource with improved performance and that may affect the latency and thereby provide benefits such as reduced user waiting time, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

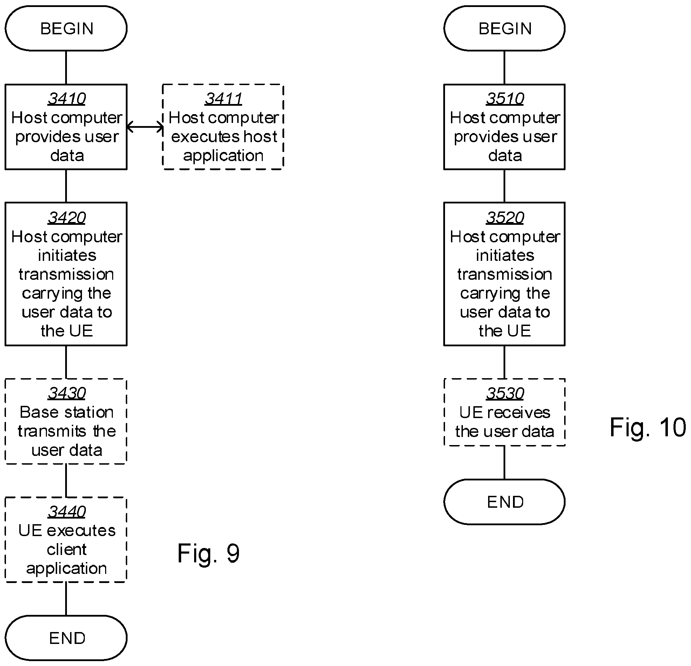

**Fig. 9** is a flowchart illustrating a method implemented in a communication system, in accordance with one embodiment. The communication system includes a host computer, a base station and a UE which may be those described with reference to Figs. 7 and 8. For simplicity of the present disclosure, only drawing references to Fig. 9 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 10** is a flowchart illustrating a method implemented in a communication system, in accordance with one embodiment. The communication system includes a host computer, a base station and a UE which may be those described with reference to Figs. 7 and 8. For simplicity of the present disclosure, only drawing references to Fig. 10 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

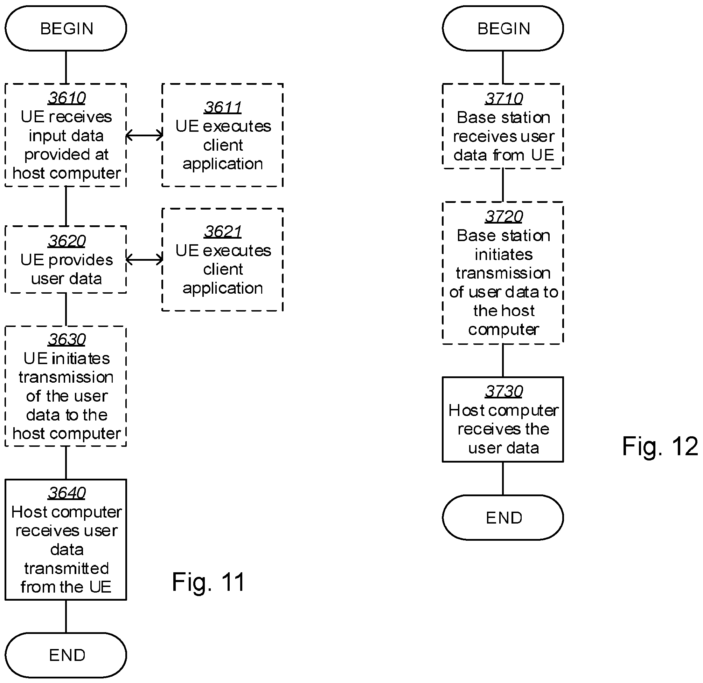

**Fig. 11** is a flowchart illustrating a method implemented in a communication system, in accordance with one embodiment. The communication system includes a host computer, a base station and a UE which may be those described with reference to Figs. 7 and 8. For simplicity of the present disclosure, only drawing references to Fig. 11 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 12** is a flowchart illustrating a method implemented in a communication system, in accordance with one embodiment. The communication system includes a host computer, a base station and a UE which may be those described with reference to Figs. 7 and 8. For simplicity of the present disclosure, only drawing references to Fig. 12 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It will be appreciated that the foregoing description and the accompanying drawings represent non-limiting examples of the methods and apparatus taught herein.

As such, the apparatus and techniques taught herein are not limited by the foregoing description and accompanying drawings. Instead, the scope of the invention is defined by the appended claims.

## Claims

1. A method performed by a network node (13) for handling a service request for an edge connectivity service from an application server (15) in a communication network, wherein the application server (15) comprises an application providing an end-user service to a user equipment, wherein the edge connectivity service is a connectivity between the application and the user equipment accessing the end-user service, the method comprising:
- configuring (301) the application with the edge connectivity service for the user equipment, wherein configuring (301) comprises:
- setting up (3011) configuration for the edge connectivity service by negotiating with the application server (15) for determining the configuration of the edge connectivity service and by registering the edge connectivity service with the configuration for the application;
- receiving (3012) the service request for the edge connectivity service from the application server (15), wherein the service request comprises an indication of the user equipment; and
- setting up (3013) a configuration of one or more radio network nodes of a radio access network for providing the edge connectivity service to the user equipment.

2. The method according to claim 1, wherein configuring further comprises:
- registering (3014) the user equipment to the edge connectivity service.

3. The method according to any of the claims 1-2, wherein configuration for the edge connectivity service comprises one or more of:
policy of a handover to a second anchor point from a first anchor point based on a location of the user equipment;
one or more identities of anchor points;
quality of service, QoS, parameters;
traffic classifier rules to which the edge connectivity service applies; and
level of involvement of the application in an handover.

4. A network node (13) for handling a service request for an edge connectivity service from an application server (15) in a communication network, wherein the application server (15) comprises an application providing an end-user service to a user equipment, wherein the edge connectivity service is a connectivity between the application and the user equipment accessing the end-user service, the network node is configured to:
- configure the application with the edge connectivity service for the user equipment (10), wherein the network node is configured to configure the application by being configured to
- set up configuration for the edge connectivity service by negotiating with the application server (15) for determining the configuration of the edge connectivity service and registering the edge connectivity service with the configuration for the application;
- receive the service request for the edge connectivity service from the application server, wherein the service request comprises an indication of the user equipment; and
- setup a configuration of one or more radio network nodes of a radio access network for providing the edge connectivity service to the user equipment.

5. The network node (13) according to claim 4, wherein the network node is configured to configure the application by further being configured to register the user equipment to the edge connectivity service.

6. The network node (13) according to any of the claims 4-5, wherein configuration for the edge connectivity service comprises one or more of:
policy of a handover to a second anchor point from a first anchor point based on a location of the user equipment;
one or more identities of anchor points;
quality of service, QoS, parameters;
traffic classifier rules to which the edge connectivity service applies; and
level of involvement of the application in an handover.

7. A computer program product comprising instructions, which, when executed on at least one processor of a network node (13), cause the network node (13) to carry out the method according to any of the claims 1-3.

8. A computer-readable storage medium, having stored thereon a computer program product comprising instructions which, when executed on at least one processor of a network node (13), cause the network node (13) to carry out the method according to any of the claims 1-3.

## Patentansprüche

1. Verfahren, das von einem Netzwerkknoten (13) durchgeführt wird, zum Handhaben einer Dienstanforderung für einen Edge-Konnektivitätsdienst von einem Anwendungsserver (15) in einem Kommunikationsnetzwerk, wobei der Anwendungsserver (15) eine Anwendung umfasst, die einer Benutzerausrüstung einen Endbenutzerdienst bereitstellt, wobei der Edge-Konnektivitätsdienst eine Konnektivität zwischen der Anwendung und der Benutzerausrüstung ist, die auf den Endbenutzerdienst zugreift, wobei das Verfahren umfasst:
- Konfigurieren (301) der Anwendung mit dem Edge-Konnektivitätsdienst für die Benutzerausrüstung, wobei das Konfigurieren (301) umfasst:
- Einrichten (3011) einer Konfiguration für den Edge-Konnektivitätsdienst durch Verhandeln mit dem Anwendungsserver (15) zum Bestimmen der Konfiguration des Edge-Konnektivitätsdienstes und durch Registrieren des Edge-Konnektivitätsdienstes mit der Konfiguration für die Anwendung;
- Empfangen (3012) der Dienstanforderung für den Edge-Konnektivitätsdienst vom Anwendungsserver (15), wobei die Dienstanforderung eine Angabe der Benutzerausrüstung umfasst; und
- Einrichten (3013) einer Konfiguration eines oder mehrerer Funknetzwerkknoten eines Funkzugangsnetzwerks zum Bereitstellen des Edge-Konnektivitätsdienstes für die Benutzerausrüstung.

2. Verfahren nach Anspruch 1, wobei das Konfigurieren weiter umfasst:
- Registrieren (3014) der Benutzerausrüstung beim Edge-Konnektivitätsdienst.

3. Verfahren nach einem der Ansprüche 1-2, wobei die Konfiguration für den Edge-Konnektivitätsdienst eines oder mehrere umfasst von:
Richtlinie für eine Übergabe von einem ersten Ankerpunkt an einen zweiten Ankerpunkt auf Basis eines Standorts der Benutzerausrüstung;
einer oder mehreren Identitäten von Ankerpunkten;
Dienstgüte-, QoS-, Parametern;
Verkehrsklassifizierungsregeln, auf die der Edge-Konnektivitätsdienst angewendet wird; und
Grad der Beteiligung der Anwendung an einer Übergabe.

4. Netzwerkknoten (13) zum Handhaben einer Dienstanforderung für einen Edge-Konnektivitätsdienst von einem Anwendungsserver (15) in einem Kommunikationsnetzwerk, wobei der Anwendungsserver (15) eine Anwendung umfasst, die einer Benutzerausrüstung einen Endbenutzerdienst bereitstellt, wobei der Edge-Konnektivitätsdienst eine Konnektivität zwischen der Anwendung und der Benutzerausrüstung ist, die auf den Endbenutzerdienst zugreift, wobei der Netzwerkknoten dazu konfiguriert ist:
- die Anwendung mit dem Edge-Konnektivitätsdienst für die Benutzerausrüstung (10) zu konfigurieren, wobei der Netzwerkknoten dazu konfiguriert ist, die Anwendung zu konfigurieren, indem er dazu konfiguriert ist,
- durch Verhandeln mit dem Anwendungsserver (15) zum Bestimmen der Konfiguration des Edge-Konnektivitätsdienstes eine Konfiguration für den Edge-Konnektivitätsdienst einzurichten und den Edge-Konnektivitätsdienst mit der Konfiguration für die Anwendung zu registrieren;
- vom Anwendungsserver die Dienstanforderung für den Edge-Konnektivitätsdienst zu empfangen, wobei die Dienstanforderung eine Angabe der Benutzerausrüstung umfasst; und
- eine Konfiguration eines oder mehrerer Funknetzwerkknoten eines Funkzugangsnetzwerks zum Bereitstellen des Edge-Konnektivitätsdienstes für die Benutzerausrüstung einzurichten.

5. Netzwerkknoten (13) nach Anspruch 4, wobei der Netzwerkknoten dazu konfiguriert ist, die Anwendung zu konfigurieren, indem er weiter dazu konfiguriert ist, die Benutzerausrüstung beim Edge-Konnektivitätsdienst zu registrieren.

6. Netzwerkknoten (13) nach einem der Ansprüche 4-5, wobei die Konfiguration für den Edge-Konnektivitätsdienst eines oder mehrere umfasst von:
Richtlinie für eine Übergabe von einem ersten Ankerpunkt an einen zweiten Ankerpunkt auf Basis eines Standorts der Benutzerausrüstung;
einer oder mehreren Identitäten von Ankerpunkten;
Dienstgüte-, QoS-, Parametern;
Verkehrsklassifizierungsregeln, auf die der Edge-Konnektivitätsdienst angewendet wird; und
Grad der Beteiligung der Anwendung an einer Übergabe.

7. Computerprogrammprodukt, das Anweisungen umfasst, die, wenn sie auf zumindest einem Prozessor eines Netzwerkknotens (13) ausgeführt werden, den Netzwerkknoten (13) dazu veranlassen, das Verfahren nach einem der Ansprüche 1-3 auszuführen.

8. Computerlesbares Speichermedium, auf dem ein Computerprogrammprodukt gespeichert ist, das Anweisungen umfasst, die, wenn sie auf zumindest einem Prozessor eines Netzwerkknotens (13) ausgeführt werden, den Netzwerkknoten (13) dazu veranlassen, das Verfahren nach einem der Ansprüche 1-3 auszuführen.

## Revendications

1. Procédé réalisé par un noeud de réseau (13) pour gérer une demande de service pour un service de connectivité périphérique à partir d'un serveur d'application (15) dans un réseau de communication, dans lequel le serveur d'application (15) comprend une application fournissant un service d'utilisateur final à un équipement d'utilisateur, dans lequel le service de connectivité périphérique est une connectivité entre l'application et l'équipement d'utilisateur accédant au service d'utilisateur final, le procédé comprenant :
- la configuration (301) de l'application avec le service de connectivité périphérique pour l'équipement d'utilisateur, dans lequel la configuration (301) comprend :
- l'établissement (3011) de la configuration pour le service de connectivité périphérique en négociant avec le serveur d'application (15) pour déterminer la configuration du service de connectivité périphérique et en enregistrant le service de connectivité périphérique avec la configuration pour l'application ;
- la réception (3012) de la demande de service pour le service de connectivité périphérique à partir du serveur d'application (15), dans lequel la demande de service comprend une indication de l'équipement d'utilisateur ; et
- l'établissement (3013) d'une configuration d'un ou de plusieurs noeuds de réseau radio d'un réseau d'accès radio pour fournir le service de connectivité périphérique à l'équipement d'utilisateur.

2. Procédé selon la revendication 1, dans lequel la configuration comprend en outre :
- l'enregistrement (3014) de l'équipement d'utilisateur auprès du service de connectivité périphérique.

3. Procédé selon l'une quelconque des revendications 1-2, dans lequel la configuration du service de connectivité périphérique comprend un ou plusieurs parmi :
une politique de transfert vers un second point d'ancrage à partir d'un premier point d'ancrage en fonction d'un emplacement de l'équipement d'utilisateur ;
une ou plusieurs identités de points d'ancrage ;
des paramètres de qualité de service, QoS ;
des règles de classification de trafic auxquelles s'applique le service de connectivité périphérique ; et
un niveau d'implication de l'application dans un transfert.

4. Noeud de réseau (13) pour gérer une demande de service pour un service de connectivité périphérique à partir d'un serveur d'application (15) dans un réseau de communication, dans lequel le serveur d'application (15) comprend une application fournissant un service d'utilisateur final à un équipement d'utilisateur, dans lequel le service de connectivité périphérique est une connectivité entre l'application et l'équipement d'utilisateur accédant au service d'utilisateur final, le noeud de réseau est configuré pour :
- configurer l'application avec le service de connectivité périphérique pour l'équipement d'utilisateur (10), dans lequel le noeud de réseau est configuré pour configurer l'application en étant configuré pour
- établir la configuration pour le service de connectivité périphérique en négociant avec le serveur d'application (15) pour déterminer la configuration du service de connectivité périphérique et en enregistrant le service de connectivité périphérique avec la configuration pour l'application ;
- recevoir la demande de service pour le service de connectivité périphérique du serveur d'application, dans lequel la demande de service comprenant une indication de l'équipement d'utilisateur ; et
- établir une configuration d'un ou de plusieurs noeuds de réseau radio d'un réseau d'accès radio pour fournir le service de connectivité périphérique à l'équipement d'utilisateur.

5. Noeud de réseau (13) selon la revendication 4, dans lequel le noeud de réseau est configuré pour configurer l'application en étant en outre configuré pour enregistrer l'équipement d'utilisateur auprès du service de connectivité périphérique.

6. Noeud de réseau (13) selon l'une quelconque des revendications 4-5, dans lequel la configuration pour le service de connectivité périphérique comprend un ou plusieurs parmi :
une politique de transfert vers un second point d'ancrage à partir d'un premier point d'ancrage en fonction d'un emplacement de l'équipement d'utilisateur ;
une ou plusieurs identités de points d'ancrage ;
des paramètres de qualité de service, QoS ;
des règles de classification de trafic auxquelles s'applique le service de connectivité périphérique ; et
un niveau d'implication de l'application dans un transfert.

7. Produit de programme informatique comprenant des instructions qui, lorsqu'elles sont exécutées sur au moins un processeur d'un noeud de réseau (13), amènent le noeud de réseau (13) à effectuer le procédé selon l'une quelconque des revendications 1-3.

8. Support de stockage lisible par ordinateur, sur lequel est stocké un produit de programme informatique comprenant des instructions qui, lorsqu'elles sont exécutées sur au moins un processeur d'un noeud de réseau (13), amènent le noeud de réseau (13) à effectuer le procédé selon l'une quelconque des revendications 1-3.
